# FASCICULE DE BREVET EUROPEEN

(11) **EP 1 378 977 B1**
(45) Date de publication et mention de la délivrance du brevet: **22.09.2004**
(21) Numéro de dépôt: 02360202.2
(22) Date de dépôt: 05.07.2002
(51) Int. Cl.: H02B 1/20

(54) **Système de verrouillage d'une barre de raccordement à un appareil électrique modulaire**
Verriegelungssystem für eine Sammelschiene und ein Schaltgerät
Latching system for a busbar and a modular electrical device

(43) Date de publication de la demande: 07.01.2004
(73) Titulaire: Hager Electro S.A., 67215 Obernai Cedex (FR)
(72) Inventeur: Measson, Ghislain, 67210 Obernai (FR); Boros, Ligia, 67700 Saverne (FR); Berrouba, Kamel, 67210 Obernai (FR)
(74) Mandataire: Littolff, Denis

(56) Documents cités:
- DE-A- 19 916 320
- FR-A- 2 716 305

## Description

La présente invention relève du domaine des appareils modulaires électriques, et elle concerne plus particulièrement un système de verrouillage mécanique de tels appareils, lorsqu'ils sont dotés de bornes enfichables, à des barres de raccordement classiques munies de dents de connexion régulièrement espacées.

Pour les appareils disposant de bornes enfichables, les exigences de sécurité et par conséquent les normes vont dans le sens d'un verrouillage autre que celui qui résulte de la connexion, c'est-à-dire ailleurs qu'au niveau de la borne enfichable. De préférence, pour les appareils électriques modulaires du type disjoncteur ou produits différentiels, il faut en outre prévoir des moyens qui permettent le verrouillage mécanique de barres de raccordement du type barres à fourches ou peignes de pontage à des éléments modulaires déjà fixés sur leur rail d'accrochage.

On connaît déjà des solutions dans lesquelles la connexion d'une barre de raccordement électrique à un appareil modulaire se fait au niveau de la semelle de ce dernier, en aménageant par conséquent une borne enfichable au voisinage de ladite semelle. Ces solutions nécessitent que la barre soit installée avant fixation des appareils sur le rail, et son ajout ultérieur implique évidemment le démontage des appareils déjà fixés, l'installation de la barre et le remontage desdits appareils. La barre de raccordement doit dans ce cas au surplus répondre à des caractéristiques mécaniques particulières qui lui permettent de coopérer d'une part avec le rail de fixation et d'autre part avec les semelles des appareils modulaires. Ces derniers nécessitent à leur tour une configuration spécifique, qui touche notamment à la disposition des éléments à l'intérieur du boîtier, afin de les rendre compatibles avec ce type de système en prévoyant notamment une borne accessible depuis la semelle.

On connaît également le document DE-A-19 916 320 qui divulgue un système de verrouillage mécanique à un appareil modulaire électrique d'au moins une barre de raccordement. Ce document divulgue des moyens de solidarisation permettant d'établir manuellement une liaison mécanique entre un profilé de la barre de raccordement et le boîtier de l'appareil électrique modulaire. La liaison mécanique obtenue ne peut, a priori, être rompue qu'avec l'aide d'un outil ou par action manuelle volontaire. La liaison électrique est obtenue par des liaisons flexibles ne participant aucunement au maintien de la barre de raccordement sur l'appareil électrique modulaire et les moyens de solidarisation sont des pièces rapportées supplémentaires.

Le document FR-A-2 716 305 divulgue un exemple de montage d'un appareil électrique modulaire sur un rail-support, lequel incorpore une barre de raccordement (rail électrique). La barre de raccordement ainsi décrite est donc monté indirectement sur l'appareil électrique.

La barre de raccordement comporte par ailleurs des languettes de raccordement traversant une fente d'insertion, dont les extrémités sont solidarisées dans une borne de vissage.

La présente invention vise au contraire à :
- autoriser un verrouillage de barres de raccordement ou barres à fourches sur des produits modulaires déjà fixés sur le rail ;
- n'imposer que des modifications mineures aux appareils modulaires électrique existants, exclusivement au niveau du boîtier ;
- permettre l'utilisation de barres de raccordement traditionnelles, moyennant également des modifications mineures.

Pour remplir ces objectifs, ainsi que d'autres qui apparaîtront à la lecture du présent texte, l'invention, qui concerne comme déjà mentionné un système de verrouillage mécanique à un appareil modulaire électrique d'au moins une barre de raccordement munie de dents de connexion et intégrée à un profilé en matériau isolant, ledit appareil comportant au moins une borne enfichable pour la connexion d'une desdites dents, se caractérise à titre principal en ce qu'elle comporte des moyens de solidarisation permettant d'établir manuellement une liaison mécanique verrouillée entre ledit profilé et le boîtier de l'appareil électrique modulaire, ladite liaison ne pouvant être rompue qu'avec l'aide d'un outil ou par action manuelle volontaire, lesdits moyens de solidarisation sont intégrés pour partie au dit profilé, et pour partie au boîtier, lesquels sont alors fixés directement l'un à l'autre.

Dans cette hypothèse et, selon une possibilité, la façade du boîtier de l'appareil modulaire électrique peut comporter, au voisinage d'au moins l'une de ses parois munie d'au moins une borne enfichable, une rainure transversale prévue pour coopérer avec un flanc latéral du profilé se développant sensiblement paratlèlement aux dents de connexion, et dont l'extrémité est dotée d'une excroissance prévue pour se clipser élastiquement dans ladite rainure en fin d'enfichage de la dent dans la borne de l'appareil, lorsqu'une partie du profilé arrive en butée contre ladite paroi.

Le verrouillage mécanique est obtenu, après clipsage de l'excroissance dans la rainure, du fait d'une correspondance des formes des surfaces d'appui en vis-à-vis de la rainure et de l'excroissance, qui empêche tout déplacement de la barre de raccordement et de son profilé dans le sens de l'extraction.

Selon une possibilité, ce profilé peut être prévu symétrique en section par rapport au plan moyen de la barre de raccordement, à l'exception des flancs latéraux qui remplissent des fonctions distinctes, le chant de l'un servant de butée à l'enfichage alors que l'autre comporte une portion intégrant l'excroissance, et est par conséquent plus développé vers l'extrémité des dents de connexion que le premier.

La dissymétrie introduite par le flanc comportant l'excroissance peut aussi résulter du niveau de pontage, dont découle la distance qui sépare la ou les barres de raccordement de la façade du boîtier.

Suivant une configuration possible, la partie du flan latéral dotée de l'excroissance peut être parallèle au plan moyen de symétrie. Dans ce cas, ledit flanc se développe pratiquement dans la continuité de ladite façade.

Alternativement, la portion du flanc latéral dotée de l'excroissance peut être inclinée et s'écarter alors progressivement du plan moyen de symétrie en direction de l'extrémité libre des dents.

Il est par ailleurs possible de mettre en oeuvre un ensemble de solutions s'inspirant des configurations précitées, mais dans lesquelles c'est une paroi du boîtier de l'appareil dotée de la ou des bornes enfichables qui comporte une rainure transversale, également prévue pour permettre la fixation par clipsage élastique d'une excroissance du profilé lorsqu'un de ses chants arrive en butée contre ladite paroi en fin d'enfichage de la dent de la ou des barres de raccordement équipant le profilé.

Une telle solution est notamment choisie avec les barres de raccordement dites compactes, pour lesquelles les dents de connexion sont orientées perpendiculairement aux barres. Dans ce cas, les profilés sont dessinés pour occuper un volume minimal, et leur mode de verrouillage aux boîtiers des appareils modulaires est directement prévu au niveau de la paroi à laquelle ils sont fixés.

Ce mode de verrouillage n'est bien entendu pas propre aux barres dites compactes, et peut être étendu à tous les profilés logeant de telles barres, pour peu qu'il soit possible d'y implanter une excroissance dans une zone destinée à venir au contact de ladite paroi.

Dans toutes les solutions envisagées jusqu'ici, les profilés peuvent bien entendu loger une seule barre, et coopérer avec un appareil monophasé, ou loger deux barres distinctes, pour être utilisés avec des produits phases / neutres, voire trois ou quatre barres pour des configurations tripolaires ou tétrapolaires en triphasé. Il en va de même pour toutes les solutions présentées dans la suite.

Dans l'hypothèse d'une rainure transversale pratiquée dans la paroi comportant la ou les bornes enfichables, celle-ci comporte de préférence deux lèvres qui obstruent partiellement l'ouverture débouchant dans la paroi, et l'excroissance dépassant du profilé est alors par exemple en forme de flèche dont la partie centrale axiale est évidée, les portions de part et d'autre de l'évidement central coopérant alors élastiquement avec lesdites lèvres pour réaliser le verrouillage mécanique.

L'excroissance et le logement peuvent bien entendu prendre d'autres formes connues en soi pour la réalisation de liaisons mécaniques par clipsage.

Lorsque le profilé comporte deux barres de raccordement, il peut être prévu symétrique par rapport à un plan disposé au milieu des dents et orienté parallèlement à elles, et la rainure est alors pratiquée à égale distance des bornes d'enfichage des dents. Il s'agit, à nouveau, de la configuration préférentielle qui est utilisée pour les configurations compactes à barres orientées perpendiculairement aux dents de connexion.

Selon une autre famille propre à l'invention, le système comporte une pièce de liaison entre le profilé et le boîtier de l'appareil électrique modulaire.

Il y a dans ce cas une double liaison mécanique amovible, à l'inverse des solutions de la famille précédente, pour lesquelles les systèmes de verrouillage étaient à la fois directement intégré aux dits profilés et aux boîtiers des appareils électriques, ne laissant subsister qu'une seule liaison mécanique.

Les systèmes issus de cette seconde famille prennent typiquement la forme d'une agrafe dont les extrémités prennent appui sur des surfaces d'allure parallèle orientées à l'opposé l'une de l'autre et disposées d'une part sur le boîtier de l'appareil modulaire électrique et d'autre part sur le profilé logeant la barre de raccordement.

Une solution de connexion mécanique similaire est donc mise en oeuvre à la fois sur le boîtier et sur le profilé, en intégrant les contraintes propres à chacun de ces éléments, qui résultent de leurs différents modes d'utilisation, matériaux, formes, etc.

Ainsi, selon une solution, la façade du boîtier de l'appareil modulaire peut comporter, au voisinage d'au moins l'une de ses parois munie d'au moins une borne enfichable, un ou plusieurs évidements d'orientation transversale, le profilé comportant sur un de ses flancs latéraux une portion extérieure apte à coopérer avec l'extrémité de ladite agrafe en vue de la solidarisation du profilé au boîtier par insertion de l'autre extrémité de l'agrafe dans ledit ou lesdits évidements transversaux du boîtier, l'une au moins de ces liaisons étant réalisée par clipsage élastique lorsque le profilé est en butée sur la paroi du boîtier après insertion de la ou des dents.

Plus précisément, l'agrafe peut par exemple présenter une portion centrale plane encadrée par deux rebords inclinés vers ladite portion centrale, formant crochets coopérant avec la paroi inclinée correspondante d'une rainure transversale du boîtier d'une part et une bordure dépassant du flanc latéral du profilé logeant la barre de raccordement d'autre part, l'inclinaison de ladite bordure et de ladite paroi étant sensiblement égale à celle des rebords de l'agrafe.

Dans cette configuration, l'agrafe bénéficie d'une conception simplifiée, économiquement favorable à mettre en oeuvre et aisée à fixer. La portion plane se situe sensiblement dans le prolongement de la façade du produit modulaire, et ne constitue pas une gêne dans les manipulations.

Selon une variante, l'agrafe peut comporter au moins une patte centrale de fixation en L prévue pour s'insérer dans une portion extérieure du profilé configurée en L inversée, dont la face externe perpendiculaire au flanc latéral sert de surface d'appui à au moins une excroissance équipant l'une des extrémités de l'agrafe, dont l'autre extrémité présente au moins une excroissance de forme similaire prenant appui dans au moins un évidement de la façade du boîtier, les faces d'appui dans le ou les évidements et sur la face externe du L inversé étant orientées sensiblement parallèlement à la paroi du boîtier dotée d'au moins une borne enfichable.

Dans les configurations rencontrées jusqu'alors, les agrafes doivent évidemment empêcher tout mouvement des barres de raccordement et des profilés dans le sens de leur extraction des bornes enfichables. Ces agrafes ne doivent cependant pas non plus être enlevables par traction exercée perpendiculairement à la façade des appareils modulaires électriques : la patte configurée en L empêche tout déplacement dans cette direction, fonction que n'assurent pas les excroissances d'extrémité. Dans l'hypothèse précédente, l'inclinaison des parois empêche tout déplacement selon les deux directions précitées.

Suivant une configuration possible, les évidements du boîtier, les excroissances de l'agrafe venant s'y loger et les pattes centrales sont au nombre de deux, disposés sur les côtés latéraux de l'agrafe.

L'avantage de cette solution est notamment de préserver dans la mesure du possible la façade du boîtier, qui n'est entaillée qu'au niveau des deux grands côtés latéraux, et donc le volume interne de celui-ci.

Suivant encore une autre configuration, le boîtier de l'appareillage modulaire électrique peut comporter des évidements pratiqués sur les deux grands côtés latéraux du boîtier et ouvrant sur la façade, pouvant coopérer avec des oreilles disposées latéralement et à une extrémité de l'agrafe, dont l'autre extrémité présente un crochet orienté vers une paroi du boîtier doté d'au moins une borne enfichable, ce crochet étant apte à coopérer avec un crochet inversé dépassant d'un flan du profilé lorsque celui-ci est en contact avec ladite paroi, lesdits évidements et la forme des oreilles autorisant un débattement angulaire limité de l'agrafe pour libérer/bloquer le profilé.

Dans ce cas, de préférence, l'agrafe est articulée dans le boîtier autour d'un arbre orienté transversalement et parallèlement à la façade du boîtier. De préférence encore, les oreilles et les évidements latéraux comportent des portions circulaires en contact guidant le mouvement de rotation.

Selon une autre famille encore, les systèmes de verrouillage de l'invention sont caractérisés en ce qu'ils comportent une agrafe dont les extrémités prennent appui sur des surfaces orientées sensiblement perpendiculairement l'une à l'autre, et disposées respectivement sur le boîtier de l'appareil modulaire électrique et sur le profilé logeant la barre de raccordement.

Une mise en oeuvre possible de cette solution peut résulter d'une configuration dans laquelle les deux grands côtés latéraux du boîtier comportent des évidements ouvrant sur la façade dudit boîtier, lesquels peuvent coopérer avec des oreilles disposées latéralement et à une extrémité d'une première portion de l'agrafe d'allure parallèle à la façade du boîtier, ladite agrafe comportant une seconde portion d'allure parallèle à la paroi du boîtier dotée d'au moins une borne enfichable et enveloppant le profilé logeant la barre de raccordement, la face du profilé proximale de la semelle du boîtier servant alors de surface d'appui pour une excroissance de l'agrafe. Dans cette configuration, les évidements et les oreilles autorisent aussi un débattement angulaire limité de l'agrafe pour libérer/bloquer le profilé.

La possibilité d'une rotation d'angle limité s'impose car, l'agrafe enveloppant la totalité du profilé et se développant parallèlement à la paroi comportant la ou les bornes d'enfichage, il est nécessaire de basculer la portion enveloppante pour pouvoir libérer ledit profilé, ou à l'inverse pour le verrouiller.

De préférence, les évidements et les oreilles présentent à nouveau une portion circulaire en contact, orientée vers la paroi intégrant au moins une borne enfichable, et guidant le mouvement de rotation.

Selon encore une autre famille, le système de verrouillage objet de la présente invention se caractérise en ce qu'il comporte une pièce de liaison entre la barre de raccordement et le boîtier de l'appareil électrique modulaire.

La liaison mécanique ne concerne donc plus le profilé logeant la barre de raccordement, mais directement cette dernière.

Selon une configuration possible répondant à cette dernière caractéristique, chaque dent de la barre de raccordement peut comporter une lumière dans laquelle peut s'insérer un pion guidé dans un conduit débouchant dans la façade du boîtier et menant à cette lumière lorsque la dent est enfichée dans une borne, ledit pion comportant une tête reposant en appui sur la façade du boîtier.

Dans cette hypothèse, bien que rien d'apparent ne vienne entraver le mouvement d'extraction du profilé et de la barre de raccordement qu'il loge, ce déplacement est impossible car le pion verrouille la dent au voisinage de la borne enfichable.

Dans toutes les hypothèses présentées précédemment, le dispositif de verrouillage selon l'invention ne peut être enlevé qu'à l'aide d'un outil. Dans toutes les configurations, il a donc été prévu soit un espace résiduel entre ledit dispositif et le boîtier / le profilé, afin de pouvoir y insérer la lame d'un outil, soit un orifice prévu à cet effet, et permettant ladite insertion aux mêmes fins, soit encore une construction du profilé permettant un déverrouillage par déplacement. Dans la déverrouillage par déplacement. Dans la plupart des cas, l'outil en question peut prendre la forme d'un simple tournevis dont la lame est utilisée comme levier pour retirer le dispositif de verrouillage.

Les configurations proposées sont soit uniformément applicables à tous les appareils modulaires disposés sur un rail, comme c'est le cas par exemple lorsque le dispositif de l'invention est intégré à la fois au profilé logeant la barre de raccordement et au boîtier de l'appareil modulaire, soit applicable individuellement, appareil par appareil.

L'invention va à présent être décrite plus en détail, en référence aux figures annexées, pour lesquelles :
la figure 1 est une représentation en perspective d'une première solution de système de verrouillage selon l'invention, la barre de raccordement étant représentée déconnectée de la borne enfichable de l'appareil électrique ;
la figure 2 est une vue en perspective de la même solution, la barre de raccordement étant cette fois connectée ;
la figure 3 représente une variante à la configuration des figures 1 et 2 ;
les figures 4a et 4b montrent, en section, un mode de verrouillage appliqué à la paroi de l'appareil électrique modulaire doté des bornes enfichables ;
la figure 5 montre, en perspective, une solution avec une agrafe fixable d'une part au boîtier de l'appareil électrique modulaire et d'autre part au profilé logeant la barre de raccordement ;
la figure 6 montre une variante à la solution de la figure 5, en position déconnectée ;
la figure 7 reprend la solution de la figure 6, en position connectée ;
la figure 8 représente, en perspective, une configuration rotative de l'invention, obtenue à partir d'un cache-borne traditionnel ;
la figure 9 est une vue en perspective d'une autre variante du système selon l'invention, réalisant un verrouillage par appui sur des surfaces du boîtier et du profilé d'allure perpendiculaire ;
la figure 10 représente une variante de la configuration de la figure 9, appliquée à un autre type de profilé logeant la barre de raccordement ;
la figure 11 est une vue, toujours en perspective, d'une solution avec pion de verrouillage de la barre de raccordement, en représentation dissociée ; et
la figure 12 montre les éléments de la figure 11 associés, la barre étant verrouillée au boîtier de l'appareil modulaire.

En référence aux différentes figures, seuls les éléments qui font partie du système de verrouillage de la présente invention seront décrits en détail, le fonctionnement ou la mise en oeuvre des appareils électriques modulaires d'une part et des barres de connexion d'autre part n'étant pas l'objet de la présente invention et étant supposés connus pour les besoins de l'explication de celle-ci.

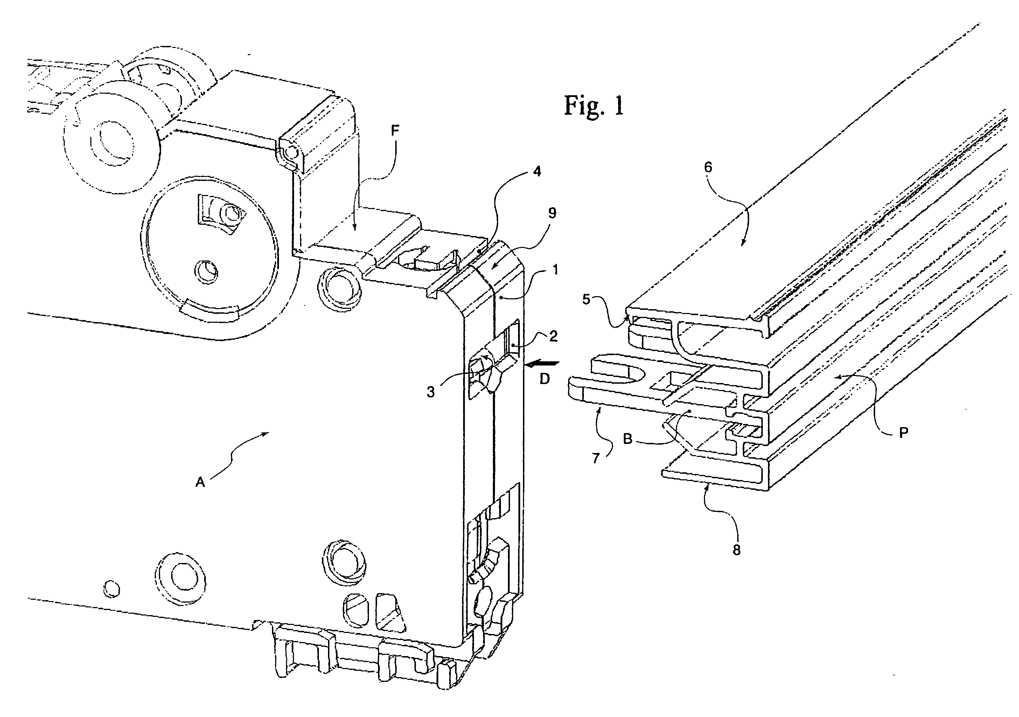

En référence à la figure 1, l'appareil modulaire électrique (A) représenté est connecté à une phase via une barre de raccordement (B) intégrée dans un profilé isolant (P). Le boîtier de cet appareil (A) comporte sur sa façade (F), au voisinage de sa paroi (1) munie d'un orifice (2) conduisant à la borne enfichable (3), une rainure (4). Celle-ci est destinée à coopérer avec une excroissance (5) équipant l'extrémité d'un flanc latéral (6) du profilé (P) se développant sensiblement parallèlement aux dents en fourche (7). De préférence, ce flan (6) est précontraint, et par conséquent orienté légèrement en direction de la barre (B).

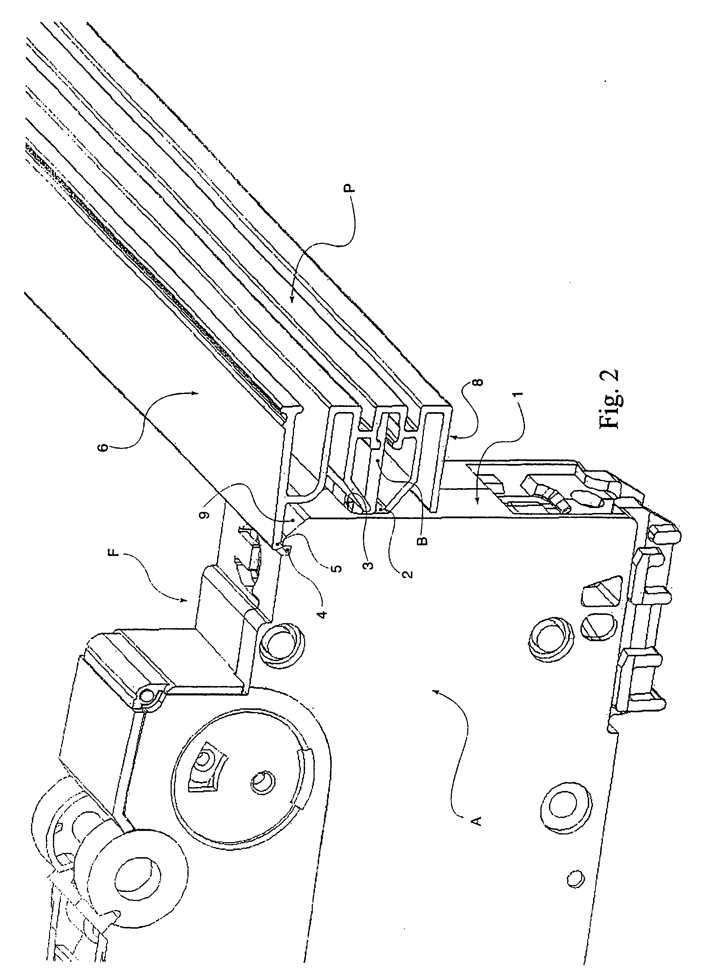

La figure 2 montre comment le verrouillage s'opère. La borne (3) disposée à l'intérieur du boîtier (A) étant enfichable, la fourche (7) peut être fixée par simple déplacement rectiligne de la barre (B), par action sur son profilé (P), dans la direction de la flèche (D) de la figure 1, en exerçant une pression destinée à vaincre la contrainte élastique opposée par un élément de rappel de la borne enfichable (3). L'enfichage est possible jusqu'à ce que le chant du flanc latéral (8) du profilé (P) arrive en butée contre la paroi (1) dans la phase finale du déplacement. Dans la dernière partie du déplacement, l'extrémité équipée de l'excroissance (5) du flanc latéral opposé (6) rencontre la partie supérieure du plan incliné (9) surmontant la paroi (1), ce qui provoque une flexion du profilé (P), essentiellement au niveau dudit flanc (6).

Au moment où le chant dudit flanc latéral (8) arrive au contact de la paroi (1), l'excroissance (5) se clipse élastiquement dans la rainure (4). Le verrouillage mécanique est alors bien réalisé. Seule l'insertion d'un outil entre la façade (F) et le flanc latéral supérieur (6) permet d'obtenir le déverrouillage.

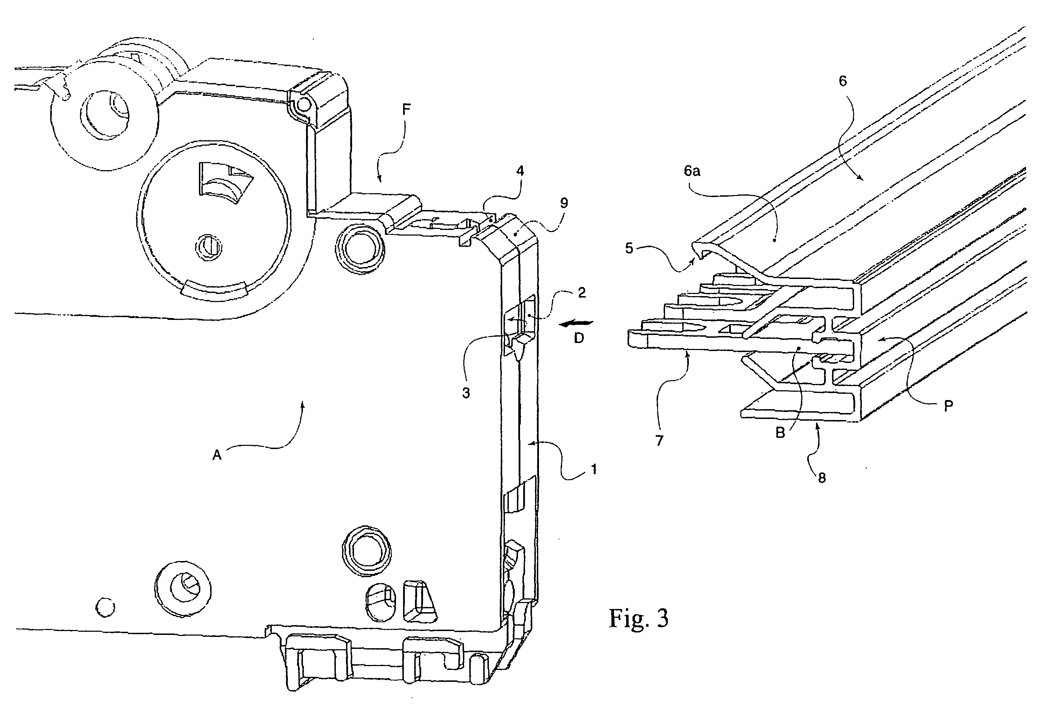

La solution représentée en figure 3 est sensiblement la même que celle illustrée par les deux figures précédentes, la seule variante consistant en un changement du profilé (P) au niveau du flan latéral supérieur (6). Celui-ci n'est pas intégralement plat, mais comporte un plan incliné (6a) permettant à l'excroissance (5) d'être disposée au même niveau que la façade (F) de façon à pouvoir coopérer avec la rainure (4) lorsque les fourches (7) de la barre de raccordement (B) sont insérées dans le boîtier (A) de l'appareil modulaire électrique. Le profilé (P) est conçu de manière quasiment symétrique par rapport à un plan médian de la barre de raccordement (B), seule l'existence du plan incliné (6A) brisant ladite symétrie. Dans cette configuration, l'outil est indispensable pour réaliser le déverrouillage.

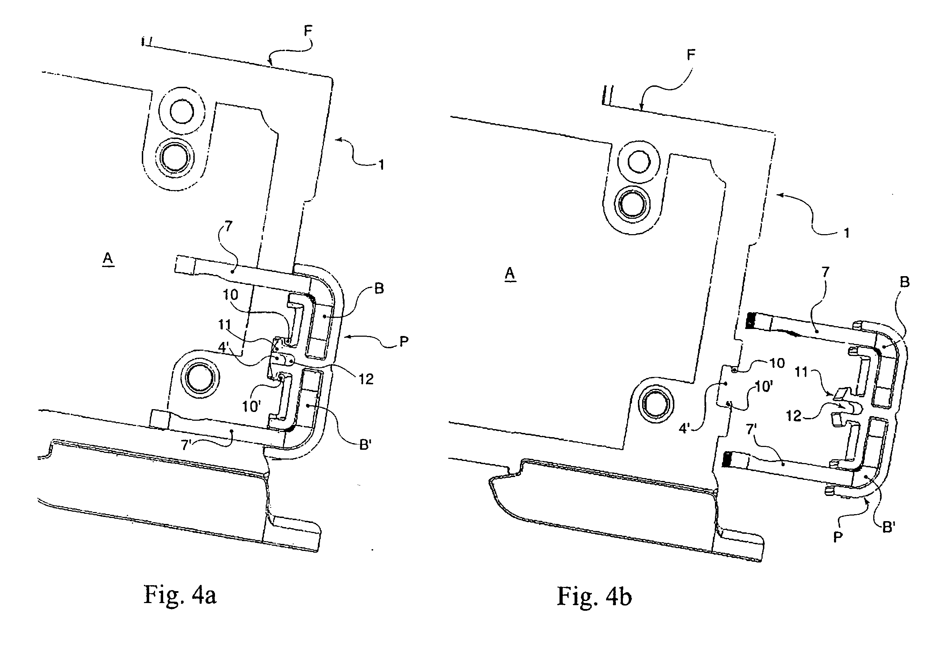

Les figures 4a et 4b montrent une solution dans laquelle la rainure (4') est pratiquée dans la paroi (1) du boîtier (A), et non plus dans la façade (F). Cette solution peut notamment être appliquée lorsque les niveaux de pontage sont plus éloignés de la façade (F), comme c'est le cas sur ces figures. Ces figures se distinguent aussi par la représentation d'un profilé (P) contenant deux barres de raccordement (B, B'), selon une configuration symétrique. Il s'agit d'ailleurs d'une barre de pontage double à configuration compacte : en figure 4a, il apparaît qu'en position connectée, le profilé ne dépasse guère de la paroi (1) de l'appareil électrique modulable et est par conséquent très favorable en terme de gestion d'espace.

Cette configuration permet bien entendu le démontage d'un seul appareil d'une rangée, notamment du fait de l'élasticité de l'isolant et des jeux d'encliquetage. Lorsqu'on insère à l'inverse un appareil dans une rangée, celui-ci peut venir buter sur le profilé, qui est verrouillé mécaniquement aux autres appareils de la rangée.

La rainure (4') est équipée de lèvres (10, 10') obstruant partiellement son ouverture, et permettant le clipsage de deux branches parallèles d'une excroissance (11) en forme de flèche. L'élasticité de cette excroissance (11) est conférée par un évidement central (12) qui permet à chacune desdites branches de fléchir en direction de l'autre au moment de l'insertion. Lorsque la barre de raccordement double (B, B') et son profilé (P) sont en position connectée, les dents (7, 7') étant alors électriquement connectées dans les bornes enfichables équipant les deux niveaux de pontage de l'appareil modulaire électrique, les chants d'extrémité des deux branches symétriques du profilé (P) sont au contact de la paroi (1), et forment butée à l'insertion.

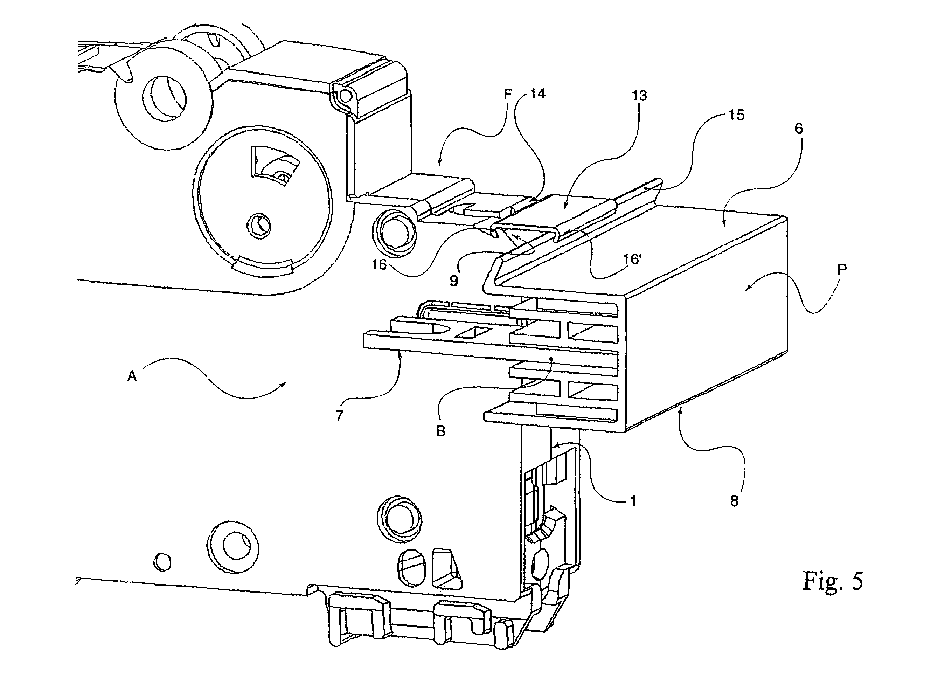

La figure 5 représente une variante dans laquelle le dispositif de verrouillage selon l'invention est réalisé par une agrafe (13) coopérant d'une part avec le boîtier (A) de l'appareil modulaire électrique, et d'autre part avec une portion du profilé logeant la barre (B) de raccordement. Ladite agrafe (13) comporte en l'occurrence une portion centrale plane bordée par deux rebords (16, 16') inclinés destinés à coopérer respectivement avec une rainure (14) pratiquée dans la façade (F) du boîtier (A) et avec un rebord incliné (15) dépassant du flan latéral supérieur (6) du profilé (P). Celui-ci, en l'absence dudit rebord incliné, serait symétrique. Ses flans latéraux (6, 8) servent de butée à l'insertion des dents (7) à l'intérieur des bornes enfichables (non représentées). Pour réaliser le verrouillage par clipsage, soit l'agrafe (13), soit le profilé (P), soit encore les deux, sont de plus constitués en un matériau élastiquement déformable.

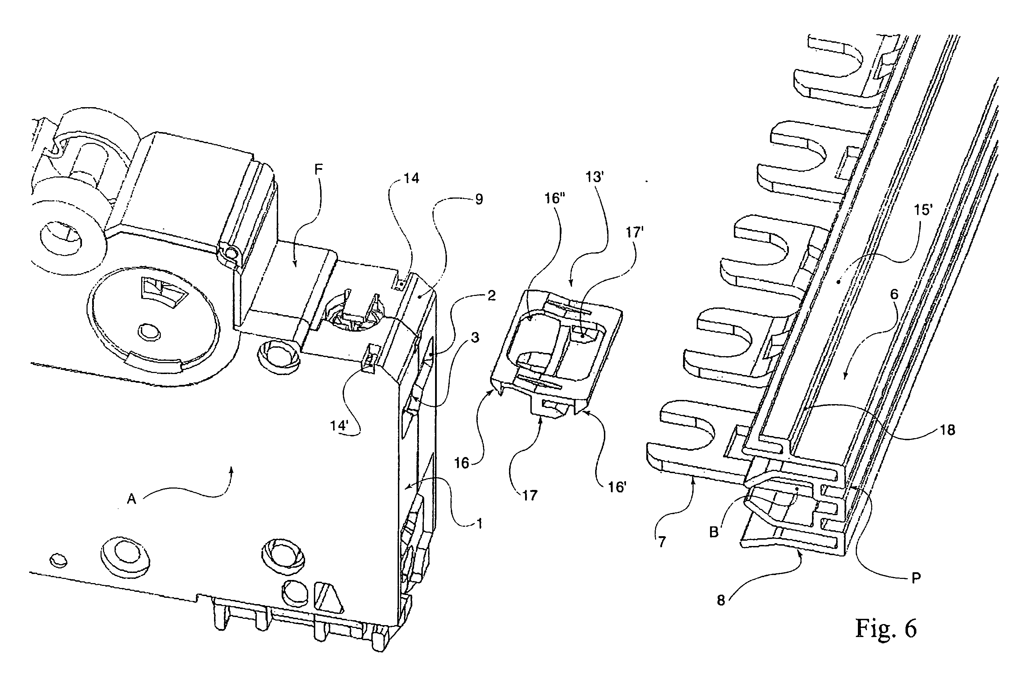

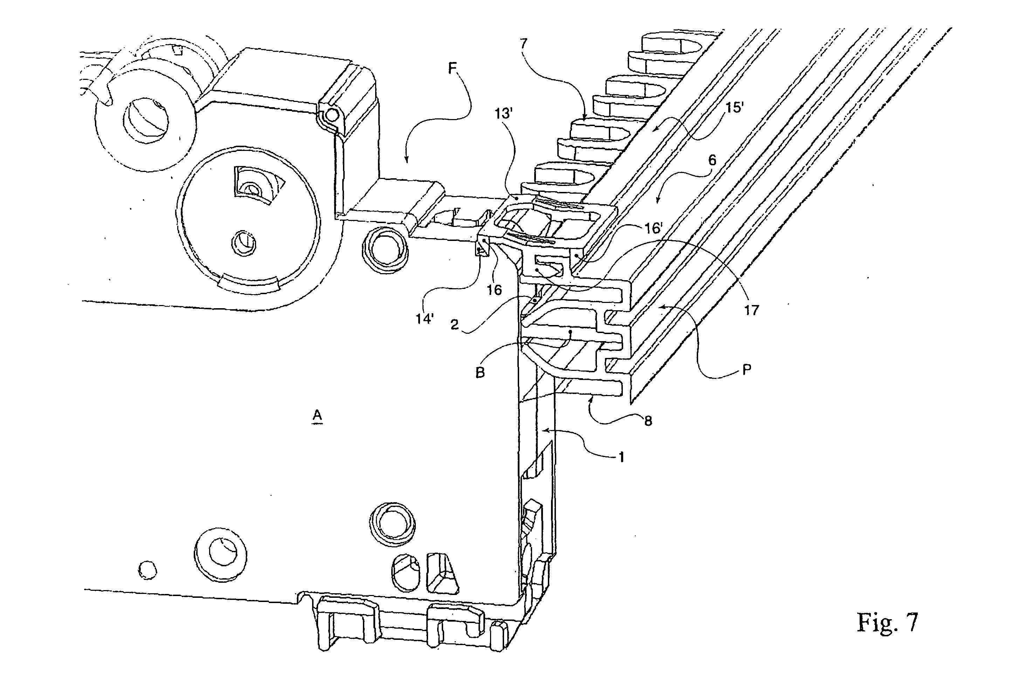

La solution présentée dans les figures 6 et 7 constitue une variante à l'agrafe de la figure 6. La nouvelle agrafe (13') est sensiblement plus complexe que la précédente, en ce qu'elle comporte non seulement deux bordures (16, 16') d'extrémité, mais également deux pattes (17, 17') en forme de L couché. En réalité, du côté destiné à coopérer avec le boîtier (A), le rebord (16) est divisé en deux rebords (16, 16") destinés à coopérer respectivement avec des évidements (14', 14) disposés aux extrémités transversales de la façade (F) du produit (A). Les pattes (17 et 17') sont prévues pour coopérer avec une portion (15') de profilé (P) qui dépasse à l'extérieur de son flan latéral (6), portion qui prend la forme d'un L couché inversé par rapport à celui qui constitue les pattes (17, 17'). Celles-ci réalisent un verrouillage dans une direction perpendiculaire à celle du plan moyen de la barre de raccordement (B), alors que les rebords (16, 16', 16") réalisent le verrouillage dans la direction d'insertion des fourches (7) dans les bornes enfichables (3). Lesdites pattes (16, 16', 16") comportent à cet effet des surfaces d'appui planes perpendiculaires à ladite direction d'insertion, et non plus des surfaces inclinées comme dans la solution de la figure 5. Ces surfaces d'appui des rebords (16, 16', 16") coopèrent respectivement avec les surfaces en vis-à-vis des évidements parallélépipédiques (14, 14') et de la surface externe de la base du L constituant la portion (15').

Les deux verrouillages dans deux directions perpendiculaires apparaissent particulièrement bien en figure 7.

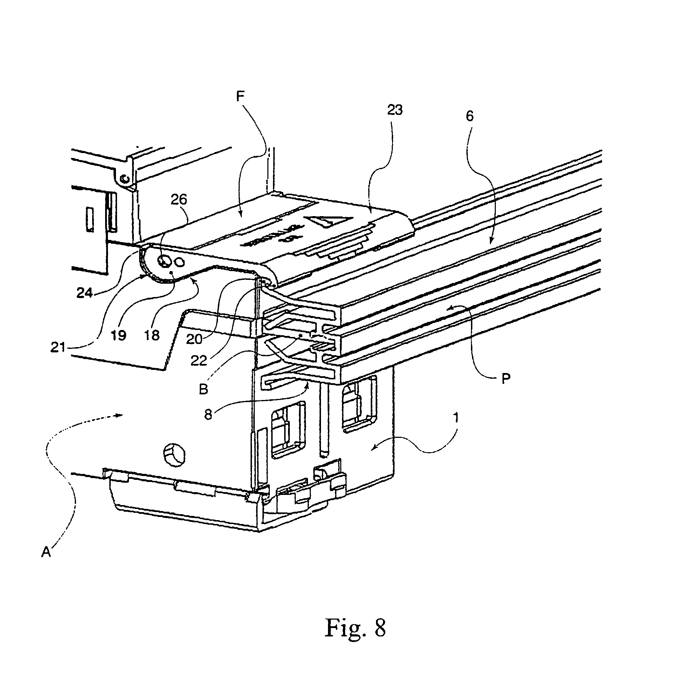

La solution présentée en figure 8 peut être qualifiée de rotative. Elle concerne plus particulièrement un interrupteur différentiel dont l'agrafe est constituée d'un corps d'allure plane rotatif (23) pivotant autour de plots (26) disposés transversalement au boîtier (A) de l'appareil électrique modulaire. Celui-ci comporte des évidements (24) pratiqués dans ses grands côtés latéraux, et notamment dotés d'une portion circulaire (21), qui épousent la forme extérieure d'oreilles (19) disposée latéralement à l'agrafe (23). La portion arrondie (21) est continue à un plan incliné (18) qui ne s'oppose pas à la rotation dans le sens de l'ouverture de l'agrafe, et sert de butée dans le sens de la fermeture. L'extrémité opposée de l'agrafe comporte un crochet (22) qui coopère pour le verrouillage avec un crochet (20) d'orientation inverse dépassant du flanc (6) du profilé (P). Ce type d'agrafage cumule la fonction de verrouillage avec une fonction plus classique de cache borne.

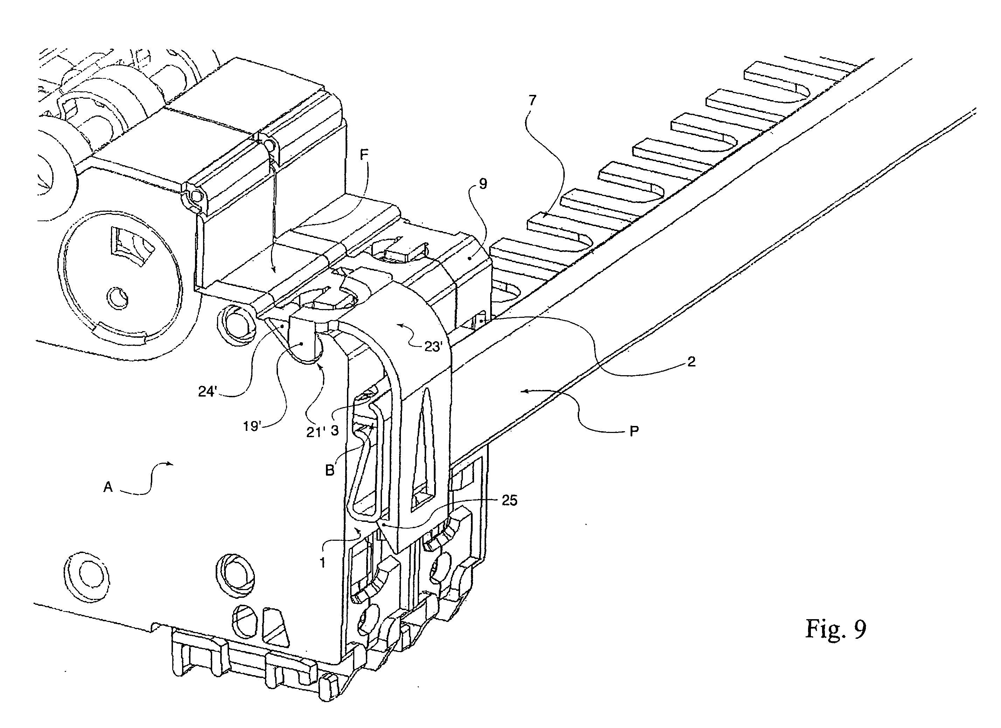

La configuration représentée en figure 9 est également rotative, mais se différencie de la précédente en ce que les surfaces d'appui conférant le verrouillage sont d'allure perpendiculaire l'une à l'autre. Dans cette hypothèse, la portion circulaire (21) des oreilles est orientée à l'opposé de celle présentée en figure 8, et il n'y a pas d'arbre de rotation. Les évidements (24') pratiqués dans les grands côtés latéraux du boîtier (A) sont inversés par rapport à ceux de la solution précédente.

L'agrafe (23') enveloppe le profil (P) logeant la barre de raccordement (B), et comporte une excroissance (25) dotée d'une surface d'appui d'allure parallèle à la façade (F), qui exerce une action sur la paroi inférieure du profilé (P). Le verrouillage et le déverrouillage s'effectuent par déplacement de l'agrafe (23') selon un mouvement de rotation autour d'un axe virtuel centré dans les oreilles latérales (19').

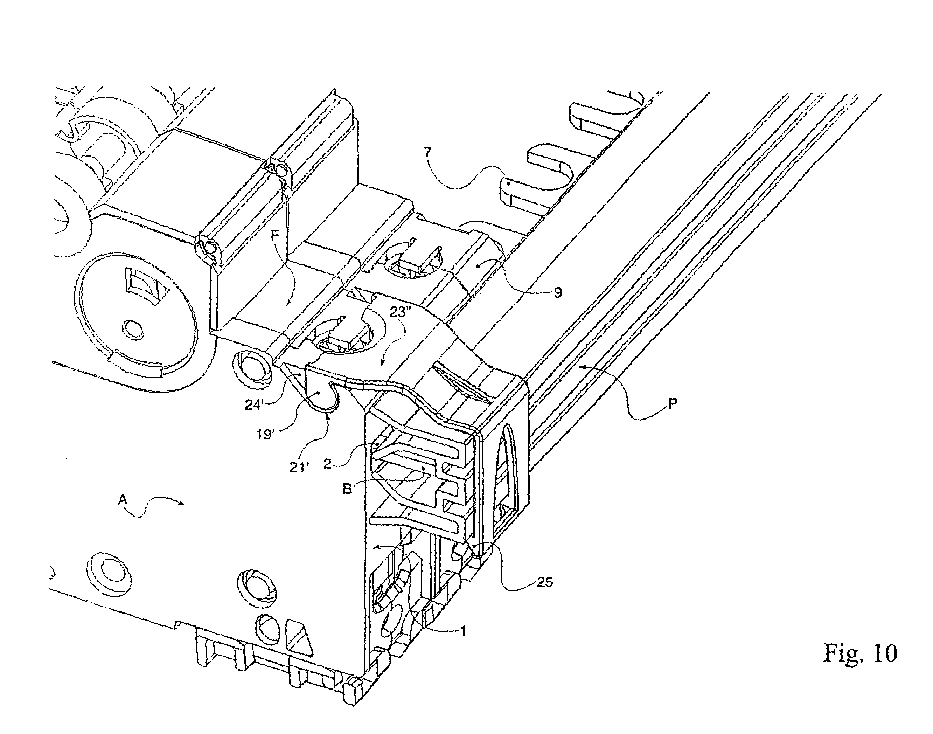

La solution présentée en figure 10 reprend le même principe, avec une autre forme d'agrafe (23') qui s'adapte à un profilé (P) différent de celui de la solution précédente. Cette solution peut être qualifiée d'universelle, car adaptable à tout type de barres de raccordement, sans nécessité de les modifier.

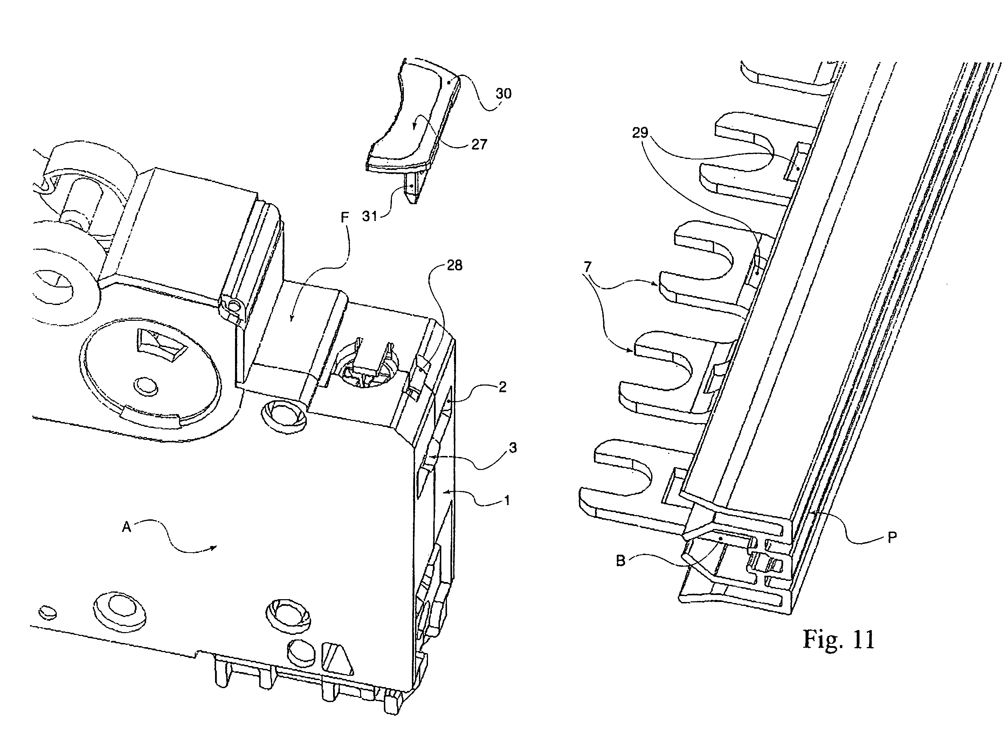

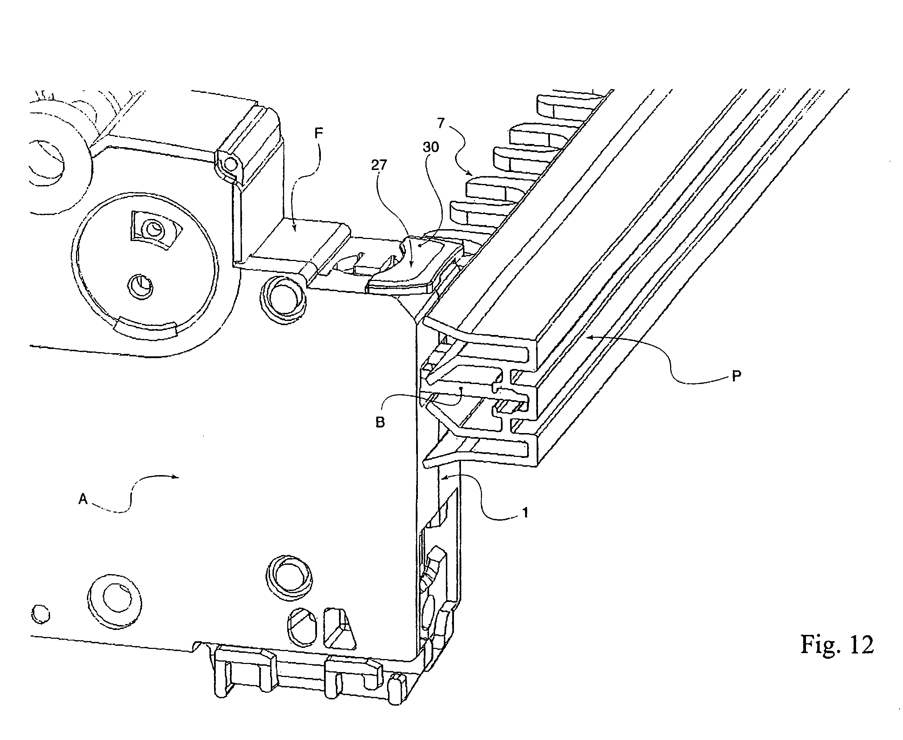

En référence aux figures 11 et 12, le verrouillage entre le boîtier (A) des appareils modulaires et la barre de raccordement (B) s'effectue non plus via le profilé (P), mais directement au niveau des fourches (7) de ladite barre (B).

Dans cette hypothèse, un pion (27) est enfichable dans un conduit (28) débouchant dans la façade (F) du boîtier (A), et menant à des lumières (29) pratiquées dans la barre de raccordement (B) lorsqu'elle est enfichée dans les bornes (3) de connexion rapide.

Ces pions (27) comportent une tête (30) qui vient en appui sur la façade (F) de l'appareil, d'allure perpendiculaire au corps (31) enfichée dans les conduits (28) et destinés à coopérer avec les lumières (29).

Lorsqu'ils sont enfichés dans ces dernières, les pions (27) verrouillent la barre de raccordement (B) au boîtier (A). La fonction du profilé (P) est alors de permettre le positionnement correct des lumières (29) au débouché des conduits (28), lorsqu'il arrive en butée contre la paroi (1).

## Revendications

1. Système de verrouillage mécanique à un appareil modulaire électrique A A d'au moins une barre de raccordement B - B' munie de dents (7, 7') de connexion et intégrée à un profilé P en matériau isolant, ledit appareil comportant au moins une borne enfichable (3) pour la connexion avec une desdites dents (7, 7'), **caractérisé en ce qu'**il comporte des moyens de solidarisation permettant d'établir manuellement une liaison mécanique verrouillée entre ledit profilé P et le boîtier de l'appareil électrique modulaire, ladite liaison ne pouvant être rompue qu'avec l'aide d'un outil ou par action manuelle volontaire, lesdits moyens de solidarisation étant intégrés pour partie audit profilé P et pour partie au boîtier, lesquels sont fixés directement l'un à l'autre.

2. Système de verrouillage selon la revendication précédente, **caractérisé en ce que** la façade F du boîtier de l'appareil modulaire électrique A comporte, au voisinage d'au moins l'une de ses paroi (1)s munie d'au moins une borne enfichable (3), une rainure (4, 4', 14, 14') transversale prévue pour coopérer avec un flanc latéral (6) du profilé P se développant sensiblement dans la direction des dents (7, 7') de connexion, et dont l'extrémité est dotée d'une excroissance (5, 11) prévue pour se clipser élastiquement dans ladite rainure (4, 4', 14, 14') en fin d'enfichage de la dent dans la borne de l'appareil, lorsqu'une partie du profilé P arrive en butée contre ladite paroi (1).

3. Système de verrouillage selon la revendication précédente, **caractérisé en ce que** le profilé P est symétrique par rapport au plan moyen de la barre de raccordement B - B', à l'exception des flancs latéraux dont le chant (8) de l'un sert de butée à l'enfichage, alors que l'autre comporte une portion intégrant ladite excroissance (5, 11) et est plus développée vers l'extrémité des dents (7, 7') de connexion que le premier.

4. Système de verrouillage selon la revendication précédente, **caractérisé en ce que** la portion du flanc latéral (6) dotée de l'excroissance (5, 11) est parallèle au plan moyen de symétrie.

5. Système de verrouillage selon la revendication 4, **caractérisé en ce que** la portion du flanc latéral (6) dotée de l'excroissance (5, 11) est inclinée et s'écarte progressivement du plan moyen de symétrie en direction de l'extrémité libre des dents (7, 7').

6. Système de verrouillage selon la revendication 1, **caractérisé en ce qu'**une paroi (1) du boîtier de l'appareil électrique modulaire comportant au moins une borne enfichable (3) présente une rainure (4, 4', 14, 14') transversale prévue pour y permettre la fixation par clipsage élastique d'une excroissance (5, 11) du profilé P lorsqu'une portion dudit profilé P arrive en butée contre ladite paroi (1), en fin d'enfichage de la dent de la ou des barres de raccordement équipant le profilé P.

7. Système de verrouillage selon la revendication précédente, **caractérisé en ce que** ladite rainure (4, 4', 14, 14') comporte deux lèvres (10, 10') qui obstruent partiellement l'ouverture débouchant (8) dans la paroi (1) dans laquelle elle est pratiquée, et l'excroissance (5, 11) dépassant du profilé P est en forme de flèche D dont la partie centrale axiale est évidée, les demies portions de part et d'autre de l'évidement central (12, 24, 24') coopérant élastiquement avec lesdites lèvres (10, 10') pour réaliser le verrouillage mécanique.

8. Système de verrouillage selon l'une des revendications 6 et 7, **caractérisé en ce que**, lorsque le profilé P comporte deux barres de raccordement, il est symétrique par rapport à un plan disposé au milieu des dents (7, 7') et orienté parallèlement à elles, et la rainure (4, 4', 14, 14') est pratiquée à égale distance des bornes d'enfichage des dents (7, 7').

9. Système de verrouillage mécanique selon la revendication 1, **caractérisé en ce qu'**il comporte une pièce de liaison entre le profilé P et le boîtier de l'appareil électrique modulaire.

10. Système de verrouillage selon la revendication précédente, **caractérisé en ce que** ladite pièce est une agrafe (13, 13', 23') dont les extrémités prennent appui sur des surfaces d'allure parallèle orientées à l'opposé l'une de l'autre et disposées d'une part sur le boîtier de l'appareil modulaire électrique A et d'autre part sur le profilé P logeant la barre de raccordement B - B'.

11. Système de verrouillage selon la revendication précédente, **caractérisé en ce que** la façade F du boîtier de l'appareil modulaire comporte, au voisinage d'au moins l'une de ses paroi (1)s munie d'au moins une borne enfichable (3), un ou plusieurs évidements d'orientation transversale, le profilé P comportant sur un de ses flancs latéraux une portion extérieure apte à coopérer avec l'extrémité de ladite agrafe (13, 13', 23') de fixation, en vue de la solidarisation du profilé P au boîtier par insertion de l'autre extrémité de l'agrafe (13, 13', 23') dans ledit ou lesdits évidements transversaux du boîtier, l'une au moins de ces liaisons étant réalisée par clipsage élastique lorsque le profilé P est en butée sur la paroi (1) du boîtier après insertion de la ou des dents (7, 7').

12. Système de verrouillage selon la revendication précédente, **caractérisé en ce que** l'agrafe (13, 13', 23') présente une portion centrale plane encadrée par deux rebords inclinés vers ladite portion centrale, formant crochet (22, 20)s coopérant avec la paroi (1) inclinée correspondante d'une rainure (4, 4', 14, 14') transversale du boîtier d'une part, et d'une bordure dépassant du flanc latéral (6) du profilé P logeant la barre de raccordement B - B' d'autre part, l'inclinaison de ladite bordure et de ladite paroi (1) étant sensiblement égale à celle des rebords de l'agrafe (13, 13', 23').

13. Système de verrouillage selon l'une des revendications 9 à 11, **caractérisé en ce que** l'agrafe (13, 13', 23') comporte au moins une patte centrale de fixation en L prévue pour s'insérer dans une portion extérieure du profilé P configurée en L inversée, dont la face externe perpendiculaire au flanc latéral (6) sert de surface d'appui à au moins une excroissance (5, 11) équipant l'une des extrémités de l'agrafe (13, 13', 23'), dont l'autre extrémité présente au moins une excroissance (5, 11) de forme similaire prenant appui dans au moins un évidement de la façade F dudit boîtier, les faces d'appui dans le ou les évidements et sur la face externe du L inversé étant orientées sensiblement parallèlement à la paroi (1) du boîtier dotée d'au moins une borne enfichable (3).

14. Système de verrouillage selon la revendication précédente, **caractérisé en ce que** les évidements du boîtier, les excroissance (5, 11)s de l'agrafe (13, 13', 23') venant s'y loger et les pattes (17, 17') centrales sont au nombre de deux, disposés sur les côtés latéraux de l'agrafe (13, 13', 23').

15. Système de verrouillage selon la revendication 10, **caractérisé en ce que** le boîtier comporte des évidements pratiqués sur les deux grands côtés latéraux du boîtier et ouvrant sur la façade F, pouvant coopérer avec des oreilles (19, 19')s disposées latéralement et à une extrémité de l'agrafe (13, 13', 23'), dont l'autre extrémité présente un crochet (22, 20) orienté vers une paroi (1) du boîtier doté d'au moins une borne enfichable (3), ce crochet (22, 20) étant apte à coopérer avec un crochet (22, 20) inversé dépassant d'un flan du profilé P lorsque celui-ci est en contact avec ladite paroi (1), lesdits évidements et la forme des oreilles (19, 19')s autorisant un débattement angulaire limité de l'agrafe (13, 13', 23') pour libérer/bloquer le profilé P.

16. Système de verrouillage selon la revendication précédente, **caractérisé en ce que** l'agrafe (13, 13', 23') est articulée autour d'un arbre lié au boîtier, orienté transversalement et parallèlement à sa façade F.

17. Système de verrouillage selon l'une des revendications 15 et 16, **caractérisé en ce que** les oreilles (19, 19')s et les évidements latéraux comportent une portion circulaire (21) en contact guidant le mouvement de rotation.

18. Système de verrouillage selon la revendication 9, **caractérisé en ce qu'**il comporte une agrafe (13, 13', 23') dont les extrémités prennent appui sur des surfaces orientées sensiblement perpendiculairement l'une à l'autre, et disposées respectivement sur le boîtier de l'appareil modulaire électrique A et sur le profilé P logeant la barre de raccordement B - B'.

19. Système de verrouillage selon la revendication précédente, **caractérisé en ce que** les deux grands côtés latéraux du boîtier comportent des évidements ouvrant sur la façade F dudit boîtier pouvant coopérer avec des oreilles (19, 19')s disposées latéralement et à une extrémité d'une première portion de l'agrafe (13, 13', 23') d'allure parallèle à la façade F, ladite agrafe (13, 13', 23') comportant une seconde portion d'allure parallèle à la paroi (1) du boîtier dotée d'au moins une borne enfichable (3) et enveloppant le profilé P logeant la barre de raccordement B - B', la face du profilé P proximale de la semelle du boîtier servant de surface d'appui pour une excroissance (5, 11) de l'agrafe (13, 13', 23'), les évidements et les oreilles (19, 19')s autorisant un débattement angulaire limité de l'agrafe (13, 13', 23') pour libérer/bloquer le profilé P.

20. Système de verrouillage selon la revendication précédente, **caractérisé en ce que** les évidements et les oreilles (19, 19')s présentent une portion circulaire (21) en contact, orientée vers la paroi (1) intégrant au moins une borne enfichable (3), et guidant le mouvement de rotation.

21. Système de verrouillage mécanique selon la revendication 1, **caractérisé en ce qu'**il comporte une pièce de liaison entre la barre de raccordement B - B' et le boîtier de l'appareil électrique modulaire.

22. Système de verrouillage selon la revendication précédente, **caractérisé en ce que** chaque dent de la barre de raccordement B - B' comporte une lumière (29) dans laquelle peut s'insérer un pion (27)guidé dans un conduit (28) débouchant (8) dans la façade F du boîtier et menant à cette lumière (29) lorsque la dent est enfichée dans la borne, ledit pion (27)comportant une tête (30) reposant en appui sur la façade F du boîtier.

## Patentansprüche

1. System zum mechanischen Verriegeln mindestens einer mit Anschlusspolen oder -zähnen (7, 7') versehenen und in ein Profil P aus Isoliermaterial integrierten Anschlusschiene B-B' an einem Elektromodul A (elektrisches Modulargerät), wobei das besagte Elektromodul A mindestens eine Einsteckklemme (3) für die Verbindung mit einem der besagten Pole oder Zähne (7, 7') aufweist, **dadurch gekennzeichnet, dass** das System Mittel zum formschlüssigen Verbinden umfasst, mit denen manuell eine mechanisch verriegelte Verbindung zwischen dem besagten Profil P und dem Gehäuse des Elektromoduls A herstellbar ist, wobei die besagte Verbindung nur mit Hilfe eines Werkzeugs oder durch eine gewollte manuelle Aktion unterbrechtbar ist und wobei die besagten Mittel zum formschlüssigen Verbinden zu einem Teil in das besagte Profil P und zu einem anderen Teil in das Gehäuse integriert sind, welche direkt aneinander befestigbar sind.

2. Verriegelungssystem nach dem vorhergehenden Anspruch, **dadurch gekennzeichnet, dass** die Außenseite F des Gehäuses des Elektromoduls A benachbart zu mindestens einer seiner mit wenigstens einer Einsteckklemme (3) versehenen Wände (1) eine Querrille (4, 4', 14, 14') aufweist, die zum Zusammenwirken mit einer seitlichen Flanke (6) des Profils P vorgesehen ist, welche sich im Wesentlichen in Richtung der Anschlusspole oder -zähne (7, 7') erstreckt und deren Ende mit einer Protuberanz (5, 11) zum elastischen Einklicken in die besagte Rille (4, 4', 14, 14') am Ende des Einsteckvorgangs des Pols oder Zahns (7, 7') in die Einsteckklemme (3) des Geräts oder Elektromoduls versehen ist, wenn ein Bereich des Profils P an besagter Wand (1) anschlägt.

3. Verriegelungssystem nach dem vorhergehenden Anspruch, **dadurch gekennzeichnet, dass** das Profil P in Bezug auf eine Mittelebene der Anschlussschiene B-B' bis auf die seitlichen Flanken symmetrisch ist, wobei die Stirnseite einer der seitlichen Flanken beim Einstecken als Anschlag dient, während die andere einen die besagte Protuberanz (5, 11) aufweisenden Teil umfasst und sich weiter in Richtung der Anschlusspole (7, 7') erstreckt als die erste.

4. Verriegelungssystem nach dem vorhergehenden Anspruch, **dadurch gekennzeichnet, dass** die mit der Protuberanz (5, 11) versehene seitliche Flanke (6) parallel zur mittleren Symmetrieebene verläuft.

5. Verriegelungssystem nach Anspruch 4, **dadurch gekennzeichnet, dass** die mit der Protuberanz (5, 11) versehene seitliche Flanke (6) geneigt ist und sich von der mittleren Symmetrieebene progressiv in Richtung zu dem freien Ende der Pole oder Zähne (7, 7') entfernt.

6. Verriegelungssystem nach Anspruch 1, **dadurch gekennzeichnet, dass** eine Wand (1) des mindestens eine Einsteckklemme (3) aufweisenden Gehäuses des Elektromoduls eine Querrille (4, 4', 14, 14') hat, die zum Befestigen durch elastisches Einklipsen einer Protuberanz (5, 11) des Profils P vorgesehen ist, sobald ein Teil oder Bereich des besagten Profils P am Ende des Einsteckens des Pols oder Zahns der das Profil P aufweisenden Anschlussschiene oder Anschlussschienen an der besagten Wand 1 anschlägt.

7. Verriegelungssystem nach dem vorhergehenden Anspruch, **dadurch gekennzeichnet, dass** die besagte Rille (4, 4', 14, 14') zwei Lippen (10, 10') aufweist, die teilweise die in die Wand (1) eingearbeitete und mündende Öffnung (8) verschließen, und dass die aus dem Profil Pheraussstehende Protuberanz (5, 11) die Form eines Pfeils D hat, dessen zentraler axialer Teil ausgespart ist, wobei die auf beiden Seiten der Zentralaussparung (12, 24, 24') liegenden Teile elastisch mit den besagten Lippen (10, 10') zusammenwirken, um die mechanische Verriegelung zu realisieren.

8. Verriegelungssystem nach einem der Ansprüche 6 und 7, **dadurch gekennzeichnet, dass** das Profil P zwei Anschlussschienen aufweist und das Verriegelungssystem symmetrisch zu einer Ebene ist, die in der Mitte der Pole oder Zähne (7, 7') und parallel zu ihnen angeordnet ist, und dass die Rille (4, 4', 14, 14') in gleichem Abstand von den Einsteckklemmen für die Pole oder Zähne (7, 7') angeordnet ist.

9. Verriegelungssystem nach Anspruch 1, **dadurch gekennzeichnet, dass** es ein Verbindungsteil zwischen dem Profil P und dem Gehäuse des Elektromoduls aufweist.

10. Verriegelungssystem nach dem vorhergehenden Anspruch, **dadurch gekennzeichnet, dass** das besagte Verbindungsteil eine Klammer (13, 13', 23') ist, deren Enden sich auf parallelen, einander entgegengesetzt orientierten Oberflächen abstützen und die einerseits auf dem Gehäuse des Elektromoduls A und andererseits auf dem die Anschlussschiene B-B' aufnehmenden Profil P angeordnet sind.

11. Verriegelungssystem nach dem vorhergehenden Anspruch, **dadurch gekennzeichnet, dass** die Außenseite F des Gehäuses des Elektromoduls A benachbart zu mindestens einer seiner mit wenigstens einer Einsteckklemme (3) versehenen Wände (1) eine oder mehrere Aussparungen mit transversaler Ausrichtung aufweist, wobei das Profil P auf seiner seitlichen Flanke eine äußeren Teil hat, der in der Lage ist, mit dem Ende der besagten Befestigungsklammer (13, 13', 23') zusammenzuwirken, um das Profil P mit dem Gehäuse durch Einführung des anderen Endes der Klammer (13, 13', 23') formschlüssig in die transversale Aussparung beziehungsweise die Aussparungen des Gehäuses zu verbinden, wobei mindestens eine dieser Verbindungen durch elastisches Einklipsen realisierbar ist, wenn das Profil P an der Wand (1) nach Einführung des beziehungsweise der Pole oder Zähne (7, 7') anschlägt.

12. Verriegelungssystem nach dem vorhergehenden Anspruch, **dadurch gekennzeichnet, dass** die Klammer (13, 13', 23') einen zentralen ebenen Teil aufweist, der von zwei gegen den besagten zentralen Teil geneigten Kanten eingerahmt ist und der Haken (22, 20) bildet , die einerseits mit der entsprechenden geneigten Wand (1) einer Querrille (4, 4', 14, 14') des Gehäuses und andererseits mit einem die Anschlussschiene B - B' lagernden , die seitliche Flanke (6) des Profils P überragenden Rand zusammenwirken, wobei die Neigung des besagten Randes und der besagten Wand (1) im wesentlichen gleich der der Kanten der Klammer (13, 13', 23') ist.

13. Verriegelungssystem nach einem der Ansprüche 9 bis 11, **dadurch gekennzeichnet, dass** die Klammer (13, 13', 23') mindestens eine zentrale Befestigungslasche in L-Form umfasst, die vorgehen ist, um in einen äußeren Teil des Profils in umgekehrter L - Form eingeführt zu werden, wobei die äußere Seite, die rechtwinklig zur seitlichen Flanke (6) verläuft, als Auflagefläche für mindestens eine Protuberanz (5, 11) dient , die eines der Enden der Klammer (13, 13', 23') ausrüstet, deren anderes Ende mindestens eine Protuberanz (5, 11) mit ähnlicher Form aufweist, die in mindestens einer Aussparung der Außenseite F des besagten Gehäuses aufliegt, wobei die Auflageseiten in der bzw. den Aussparungen und auf der Außenseite des umgekehrten L im wesentlichen parallel zur Wand (1) des mit mindestens einer Einsteckklemme (3) ausgerüsteten Gehäuses aufliegen.

14. Verriegelungssystem nach dem vorhergehenden Anspruch, **dadurch gekennzeichnet, dass** die Aussparungen des Gehäuses, wobei die Protuberanzen (5, 11) der Klammer (13, 13', 23') sich darin lagern, und die zentralen Laschen (17, 17') sich auf zwei belaufen, die auf den Seiten der Klammer (13, 13', 23') angeordnet sind.

15. Verriegelungssystem nach Anspruch 10, **dadurch gekennzeichnet, dass** das Gehäuse Aussparungen umfasst, die auf beiden großen Seiten des Gehäuses eingearbeitet sind und sich zur Außenseite F hin öffnen, wobei die beiden großen Seiten mit seitlichen und auf einem Ende der Klammer (13, 13', 23') angeordneten Ohren (19, 19') zusammenwirken, wobei das andere Ende einen Haken (22, 20) aufweist, der zu einer Wand (1) des mit mindestens einer einsteckbaren Klemme (3) ausgerüsteten Gehäuses ausgerichtet ist, wobei dieser Haken (22, 20) dazu in der Lage ist, mit einem umgekehrten Haken (22, 20) zusammenzuwirken, der über eine Flanke des Profils P hervorsteht , wenn diese in Kontakt mit der besagten Wand (1) ist, wobei die besagten Aussparungen und die Form der Ohren (19, 19') eine begrenzte Winkelbewegung der Klammer (13, 13', 23') erlauben, um das Profil P zu befreien / zu blockieren.

16. Verriegelungssystem nach dem vorhergehenden Anspruch, **dadurch gekennzeichnet, dass** die Klammer (13, 13', 23') um eine mit dem Gehäuse verbundene , transversal und parallel zu seiner Außenseite F orientierte Achse schwenkbar ist.

17. Verriegelungssystem nach einem der Ansprüche 15 und 16, **dadurch gekennzeichnet, dass** die Ohren (19, 19') und die seitlichen Aussparungen einen kreisförmigen Teil (21) umfassen, der in einem die Drehbewegung führenden Kontakt ist.

18. Verriegelungssystem nach Anspruch 9, **dadurch gekennzeichnet, dass** es eine Klammer (13, 13', 23') umfasst, deren Enden sich auf im wesentlichen rechtwinklig zueinander orientierten Flächen aufstützen und die jeweils auf dem Gehäuse des Elektromoduls A und dem die Anschlussschiene B - B aufnehmenden Profil P angeordnet sind.

19. Verriegelungssystem nach dem vorhergehenden Anspruch, **dadurch gekennzeichnet, dass** die beiden großen Seiten des Gehäuses Aussparungen umfassen, die sich zur Außenseite F des besagten Gehäuses öffnen, das mit seitlich und an einem Ende eines ersten Teils der parallel zur Außenseite F verlaufenden Klammer (13, 13', 23') angeordneten Ohren (19, 19') zusammenwirkt, wobei die besagte Klammer (13, 13', 23') einen zweiten zur Wand (1) des mit mindestens einer Einsteckklemme (3) ausgerüsteten Gehäuses parallelen zweiten Teil umfasst und das die Anschlussschiene B - B' lagernde Profil P umhüllt, wobei die Vorderseite des proximalen Profils P der Unterseite des Gehäuses als Auflagefläche für eine Protuberanz (5, 11) der Klammer (13, 13', 23') dient, wobei die Aussparungen und die Ohren (19, 19') eine begrenzte Winkelbewegung der Klammer (13, 13', 23') erlauben, um das Profil P zu befreien / zu blockieren.

20. Verriegelungssystem nach dem vorhergehenden Anspruch, **dadurch gekennzeichnet, dass** die Aussparungen und Ohren (19, 19') einen in Kontakt befindlichen kreisförmigen, zur Wand (1) orientierten, mindestens eine Einsteckklemme (3) integrierenden und die Drehbewegung führenden Teil aufweisen.

21. Verriegelungssystem nach Anspruch 1, **dadurch gekennzeichnet, dass** es ein Verbindungsteil zwischen der Anschlussschiene B - B' und dem Gehäuse des Elektromoduls umfasst.

22. Verriegelungssystem nach dem vorstehenden Anspruch, **dadurch gekennzeichnet, dass** jeder Pol oder Zahn der Anschlussschiene B-B' eine Öffnung (29) aufweist, in die ein in einer Führung geführter Stift (27) einführbar ist, welche Führung an der Außenseite F des Gehäuses mündet und zu dieser Öffnung (29) führt, wenn der Pol oder Zahn in die Klemme eingeführt ist, wobei der besagte Stift (27) einen Kopf hat, der sich auf der Außenseite F des Gehäuses abstützt.

## Claims

1. Mechanical interlocking system for a modular electrical device A, having at least one connecting bar B-B' provided with connecting prongs (7, 7') and integrated into an extruded section P of insulating material, said device containing at least one plug-in terminal (3) for connection to one of said prongs (7, 7'), **characterised in that** it contains interlocking means enabling an interlocked mechanical coupling to be manually established between said extruded section P and the housing of the modular electrical device, said coupling being able to be disconnected only with the aid of a tool or by intentional manual action, said interlocking means being integrated partly into said extruded section P and partly into the housing, which are directly attached to each other.

2. Interlocking system according to the preceding claim, **characterised in that** the front panel F of the housing of the modular electrical device A contains, in the vicinity of at least one of its walls (1) provided with at least one plug-in terminal (3), a transverse groove (4, 4', 14, 14') intended to co-operate with a lateral sidewall (6) of the extruded section P extending substantially in the direction of the connecting prongs (7, 7') , and whose end is provided with an accretion (5, 11) intended to flexibly clip into said groove (4, 4', 14, 14') on completion of the insertion of the prong into the terminal of the device when one part of the extruded section P comes to rest against said wall (1).

3. Interlocking system according to the preceding claim, **characterised in that** the extruded section P is symmetrical with respect to the median plane of the connecting bar B-B', with the exception of the lateral sidewalls of which the edge (8) of one serves as a stop during insertion, while the other contains a portion incorporating said accretion (5, 11) and extends further towards the end of the connecting prongs (7, 7') than does the first one.

4. Interlocking system according to the preceding claim, **characterised in that** the portion of the lateral sidewall (6) provided with the accretion (5, 11) is parallel to the median plane of symmetry.

5. Interlocking system according to claim 4, **characterised in that** the portion of the lateral sidewall (6) provided with the accretion (5, 11) is inclined and progressively deviates from the median plane of symmetry in the direction of the free end of the prongs (7, 7').

6. Interlocking system according to claim 1, **characterised in that** one wall (1) of the housing of the modular electrical device containing at least one plug-in terminal (3) has a transverse groove (4, 4', 14, 14') intended to enable at that point attachment by flexible clipping-on of an accretion (5, 11) of the extruded section P when one portion of said extruded section P comes to rest against said wall (1), on completion of insertion of the prong of the connection bar or connecting bars fitted to the extruded section P.

7. Interlocking system according to the preceding claim, **characterised in that** said groove (4, 4', 14, 14') contains two lips (10, 10') which partially obstruct the opening emerging (8) from the wall (1) in which it is made, and the accretion (5, 11) projecting from the extruded section P is arrow-shaped D, the central axial part of which is hollowed out, the half sections on either side of the central opening (12, 24, 24') flexibly co-operating with said lips (10, 10') in order to realise the mechanical interlocking.

8. Interlocking system according to one of claims 6 and 7, **characterised in that** when the extruded section P contains two connecting bars it is symmetrical with respect to a plane located in the middle of the prongs (7, 7') and orientated parallel to them, and the groove (4, 4', 14, 14') is made at an equal distance from the plug-in terminals of the prongs (7, 7').

9. Mechanical interlocking system according to claim 1, **characterised in that** it contains a connecting piece between the extruded section P and the housing of the modular electrical device.

10. Interlocking system according to the preceding claim, **characterised in that** said piece is a clip (13, 13', 23') the ends of which are supported on parallel surfaces aligned opposite each other and arranged on the one hand on the housing of the modular electrical device A and on the other hand on the extruded section P accommodating the connecting bar B-B'.

11. Interlocking system according to the preceding claim, **characterised in that** the front panel F of the housing of the modular device contains, in the vicinity of at least one of its walls (1) provided with at least one plug-in terminal (3), one or more transversally orientated cut-outs, the extruded section P containing on one of its lateral sidewalls an external portion capable of co-operating with the end of said retaining clip (13, 13', 23'), with the aim of interlocking the extruded section P to the housing by insertion of the other end of the clip (13, 13', 23') into said transverse cut-out or cut-outs of the housing, at least one of these links being realised by flexible clipping when the extruded section P abuts the wall (1) of the housing following insertion of the prong or prongs (7, 7').

12. Interlocking system according to the preceding claim, **characterised in that** the clip (13, 13', 23') has a flat central portion flanked by two edges inclined towards said central portion forming hooks (22, 20) co-operating with the corresponding inclined wall (1) of a transverse groove (4, 4', 14, 14') of the housing on the one hand and an edge projecting from the lateral sidewall (6) of the extruded section P accommodating the connecting bar B-B' on the other hand, the inclination of said edge and of said wall (1) being substantially equal to that of the edges of the clip (13, 13', 23').

13. Interlocking system according to one of claims 9 to 11, **characterised in that** the clip (13, 13', 23) contains at least one central L-shaped retaining lug intended to be inserted into an external portion of the extruded section P configured as an inverted L, whose external face perpendicular to the lateral sidewall (6) serves as a supporting surface for at least one accretion (5, 11) fitted to one of the ends of the clip (13, 13', 23'), whose other end has at least one accretion (5, 11) of similar shape supported in at least one cut-out of the front panel F of said housing, the supporting faces in the cut-out or cut-outs and on the external face of the inverted L being orientated substantially parallel to the wall (1) of the housing provided with at least one plug-in terminal (3).

14. Interlocking system according to the preceding claim, **characterised in that** the cut-outs of the housing, the accretions (5, 11) of the clip (13, 13', 23') being accommodated there and the central lugs (17, 17') are two in number, arranged on the lateral sides of the clip (13, 13', 23').

15. Interlocking system according claim 10, **characterised in that** the housing contains cut-outs made on the two large lateral sides of the housing and opening onto the front panel F, capable of co-operating with ears (19, 19') arranged laterally and at one end of the clip (13, 13', 23'), whose other end has a hook (22, 20) orientated towards one wall (1) of the housing provided with at least one plug-in terminal (3), this hook (22, 20) being capable of co-operating with an inverted hook (22, 20) projecting from one sidewall of the extruded section P when the latter is in contact with said wall (1), said cut-outs and the shape of the ears (19, 19') allowing a limited angular displacement of the clip (13, 13', 23') in order to release/lock the extruded section P.

16. Interlocking system according to the preceding claim, **characterised in that** the clip (13, 13', 23') is hinged about a shaft connected to the housing, orientated transversally and parallel to its front panel F.

17. Interlocking system according to one of claims 15 and 16, **characterised in that** the ears (19, 19') and the lateral cut-outs contain a circular portion (21) in contact guiding the rotary motion.

18. Interlocking system according claim 9, **characterised in that** it contains a clip (13, 13', 23') whose ends are supported on surfaces orientated substantially perpendicular to each other, and arranged on the housing of the modular electrical device A and on the extruded section P accommodating the connecting bar B-B', respectively.

19. Interlocking system according to the preceding claim, **characterised in that** the two large lateral sides of the housing contain cut-outs opening onto the front panel F of said housing being capable of co-operating with ears (19, 19') arranged laterally and at one end of a first portion of the clip (13, 13', 23') aligned parallel to the front panel F, said clip (13, 13', 23') containing a second portion aligned parallel to the wall (1) of the housing provided with at least one plug-in terminal (3) and enclosing the extruded section P accommodating the connecting bar B-B', the face of the extruded section P adjacent to the base plate of the housing serving as a supporting surface for an accretion (5, 11) of the clip (13, 13', 23'), the cut-outs and the ears (19, 19') allowing a limited angular displacement of the clip (13, 13', 23') in order to release/lock the extruded section P.

20. Interlocking system according to the preceding claim, **characterised in that** the cut-outs and the ears (19, 19') have a circular portion (21) in contact, orientated towards the wall (1) incorporating at least one plug-in terminal (3), and guiding the rotary motion.

21. Mechanical interlocking system according claim 1, **characterised in that** it contains a connecting piece between the connecting bar B-B' and the housing of the modular electrical device.

22. Interlocking system according to the preceding claim, **characterised in that** each prong of the connecting bar B-B' contains a slot (29) into which a locating pin (27) may be inserted, guided by a channel (28) opening (8) onto the front panel F of the housing and leading to this slot (29) when the prong is plugged into the terminal, said locating pin (27) containing a head (30) resting on the front panel F of the housing.
